# EUROPEAN PATENT SPECIFICATION

(11) **EP 2 100 502 B1**
(45) Date of publication and mention of the grant of the patent: **15.02.2017**
(21) Application number: 09425097.4
(22) Date of filing: 10.03.2009
(51) Int. Cl.: A01K 11/00

(54) **Tracking method for the tracking in a hog production line, in particular for the production of raw/cooked ham, especially if denominated from a protected/controlled origin.**
Verfolgungsverfahren zur Verfolgung in einer Schweineproduktionsanlage, insbesondere zur Herstellung von rohem/gekochten Schinken, besonders wenn von einer geschützten/kontrollierten Herkunft.
Procédé de suivi pour le suivi dans une ligne de production de porc, en particulier de jambon cru/cuit, surtout s'il est détenteur d'une appellation d'origine protégée/contrôlée.

(30) Priority: 12.03.2008 IT PD20080081
(43) Date of publication of application: 16.09.2009
(73) Proprietor: Cartesio 2001 S.r.l., 33038 San Daniele del Friuli, (UD) (IT)
(72) Inventor: Zuffolato, Marco, 36045 Lonigo VI (IT)
(74) Representative: Baldissera, Marco Felice

(56) References cited:
- EP-A- 0 364 044
- WO-A-01/80654
- US-A- 487 304
- US-A- 1 257 065
- US-A- 4 909 250

## Description

The object of the present invention is a tracking method for the tracking of a hog production line. The invention also concerns the structure of an identifying code suitable for realizing such a method. This method and code structure find a particular, while not exclusive, application in the production of raw/cooked ham, especially if denominated from a protected/controlled origin.

It is known that today's tracking of an animal production line represents an objective of primary relevance in order to provide a consumer with a guarantee on the origin and quality of the meats. In the case of a hog production line, a consortium named "Gran Suino Padano" was established by the breeders and meat producing industries, for the purpose of controlling and guaranteeing all the steps of the line, so as to achieve better quality and safety levels for the consumers. At this time, the control of a hog meat production and processing line is essentially carried out in two operating ways. In summary, the first way consists in a provision/application on newly born piglets of tattoos/marking tags carrying suitable production codes, and in maintaining a so-called sanitary record which collects the whole of these production codes. The second way is based on using suitable emission devices developed by the electronic industry. More specifically, these electronic devices consist of a chip containing an identifying code and of an antenna for transmitting the identifying code. Moreover, these emission devices may be of an active or a passive type, depending on whether they have to be activated or not for emitting the identifying code. Finally, these emission devices are miniaturized to allow their usage in the most diversified industrial and commercial sectors. In the case of their application in a hog production line, there have been experimentations wherein such devices have been inserted in the para-rectal and hoof-nail zones of the hogs. The lives of the latter are therefore periodically controlled through appropriate collective/individual receiving devices that receive the identifying codes from the emission devices. After appropriate informatic processing, these identifying codes are gathered to constitute the mentioned lifetime record. *For example,* EP-A-364 044 *discloses a method for implanting hypodermically in an animal an object with an electronic device which can contain readable information relating to the animal, where that object is placed in the head of the animal at a point immediately behind the place where the ear is attached to the head of the animal.*

The main drawback recognized in the first and second operating way is in the fact that they are not suitable for ensuring a complete and real-time tracking of the line. In particular, these operating ways appear suitable only for a partial coverage of the hog production line, in particular that extending from the time of birth until the termination of the hog. The butchering and processing operations of the meats thus obtained consequently fail to fall within the controlling procedures carried out under these operating ways. According to the latter, it is for instance practically impossible to carry out a successful tracking of the meats that are subjected to numerous processing steps in a ham production plant. It is consequently obvious that these operating ways are not suitable for achieving an ambitious control and guarantee target.

Another drawback especially recognized in the first operating way consists in the fact that it is not capable of ensuring an assured control of the production line, especially as concerns any fraudulent manipulations. The mentioned tattoos can in fact be rendered essentially unreadable or manipulated. In the same manner, the tags may be manipulated and re-applied to different hogs. Moreover, a serious problems encountered in the tags consists in the fact that they can accidentally be detached from their points of application on the hogs, for instance through a violent contact between groups of hogs or between a hog and the containing fences.

Another drawback especially recognized in the second operating way consists in the fact that the experimentations have evidenced that the emission devices naturally tend to migrate away from the original inserting points and get lost in the bodies of the hogs. The operation of recovering the devices consequently becomes particularly complex in view of the mass achieved by the hogs near their termination, and is potentially capable of compromising their meat in case the recovery operation could not be effected successfully.

An additional drawback again recognized in the second operating way consists in the fact that inserting the electronic devices in the mentioned inserting zones could determine the occurrence of pathologies in the treated hogs. It would consequently be necessary to administer a suitable pharmacological treatment which would be in contrast with the weaning and growing of the hogs, which should be realized in the most natural manner possible.

The aim of this invention is to set up a tracking method for the tracking of a hog production line, in particular one of a line for producing raw/cooked ham, especially if denominated from a protected/controlled origin, and an identifying code for carrying out such a method capable of essentially resolving these and other problems and drawbacks.

Within the abovementioned aim, an important object of this invention is to set up a tracking method capable of successfully achieving a complete and real-time control of a hog production, butchering and processing line.

Another important object of the present invention is to set up a tracking method capable of limiting, as far as possible, any fraudulent attempt of manipulating it.

An additional object of the present invention is to set up a tracking method capable of achieving a safe and easy recovering operation for the emission devices.

Not the last object of the present invention is that of setting up a tracking method capable of preventing the occurrence, from the very beginning, of any pathology in the treated hogs.

This aim, as well as these and other objects that will become better evident in the following, are achieved by a tracking method for the tracking of a hog production line, in particular for the production of raw/cooked ham, especially if denominated from a protected/controlled origin, and an identifying code for carrying out the mentioned method according to the enclosed claims.

According to first features of the invention, the tracking method is essentially articulated in the following phases, as outlined in the following sequence:
- A preliminary loading phase, for the loading of particular identifying codes into the emission devices;
- An inserting phase, for inserting these emission devices into a hog at the piglet stage, within 30 days from his birth or prior to leaving the original breeding station;
- Intermediate receiving/processing /memorizing phases, for the receiving, processing and memorizing of such particular identifying codes during the weaning, growing and processing phases of such a hog.

In detail, this inserting phase comprises a subcutaneous inserting operation for inserting at least one emission device under the skin of each hind leg of such a hog.

This contrivance in the inserting phase appropriately allows associating a particular identifying code with each hind leg of such a hog, and a general identifying code for such a hog, composed of a combination of such particular identifying codes. It is consequently possible to perform a complete and real-time tracking of the hog production line. The tracking is complete because the emission devices follow the hog in his weaning and growing process up to its termination, and subsequently follow the hind legs destined for a conversion to raw/cooked ham in the ham production plants. This tracking can be performed in real time, because the operators in the field can, at any instant both on-line and off-line, obtain an information on the hog such as, for exemplifying and non-limiting purposes, on his origin, his ancestors and descendants, the origin/destination of the meat cuts, etc.

Moreover, the under-skin inserting of the emission devices makes it very difficult to remove and subsequently replace them with other reprogrammed emission devices. This effectively allows achieving the purpose of limiting fraudulent manipulations as far as possible. Consequently and thanks to this solution, the tracking of the hog production line can achieve safety standards of absolute relevance.

In agreement with second festures of the invention, the inserting operation is carried out in a lodging zone about coinciding with the central surface of the zoo-technical knee, which is essentially comprised between the anatomical and the zoo-technical knee, in a cranial-caudal direction of the tibia (third proximal) toward the medial flexor of the toes and up to the medial head of the gastrocnemius muscle. This lodging zone allows a substantial stability of the emission device, not merely during the hog's weaning and growing phases, but also during the subsequent terminating and butchering operations as well as the meat processing operations in the ham production plants. This solution offers the advantage of not specifically requiring the performance of a recovery operation, because the localization of the emission devices does not compromise the edibility of the hams. The subsequent recovery operation can in any case occur in an easy and safe manner, as planned by the invention and better described in the following.

Moreover, the inserting of the emission devices in the mentioned lodging zone does not affect the hog's state of health. The experimentations performed on a significant grouping of hogs have in fact failed to entail an occurrence of pathologies such as for instance granulomas that would have resulted in a de-rating of the thighs.

Further features and advantages of the invention will become better evident in the description of the tracking method for the tracking of the hog production line, in particular one for the production of raw/cooked ham, especially if denominated from a controlled/protected origin, as illustrated for exemplifying yet non limiting purposes in the enclosed drawings, wherein:

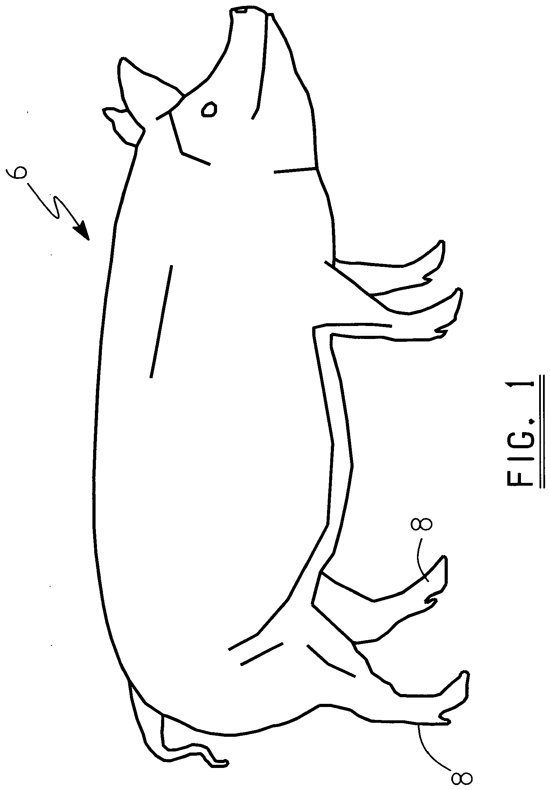

- Fig. 1 represents a summary view of a hog;
- Fig. 2 represents a medial view of the left hind leg of the hog of Fig. 1;
- Fig. 3 represents a cross-sectional view, according to the sectional tracing line III - III of Fig. 2, of the left hind leg of the hog in Fig. 1;
- Fig. 4 represents a block diagram of the tracking method according to the invention.

With reference to the mentioned figures, the tracking method for the tracking of the hog production line, in particular one for the production of raw/cooked ham, especially if denominated from a protected/controlled origin, is articulated in the operating phases illustrated below.

First of all, the method comprises a loading phase (not shown) performed at the production point of the emission devices. More specifically, in this phase specialized operators are acting to load the emitting devices, which are essentially as described and employed above according to the known state of the art, with appropriate particular identifying codes that will be better described in the following.

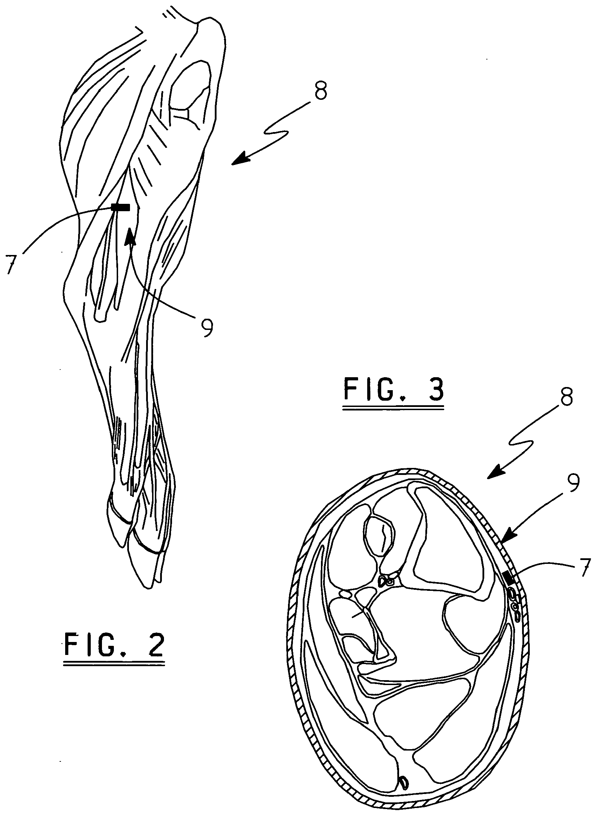

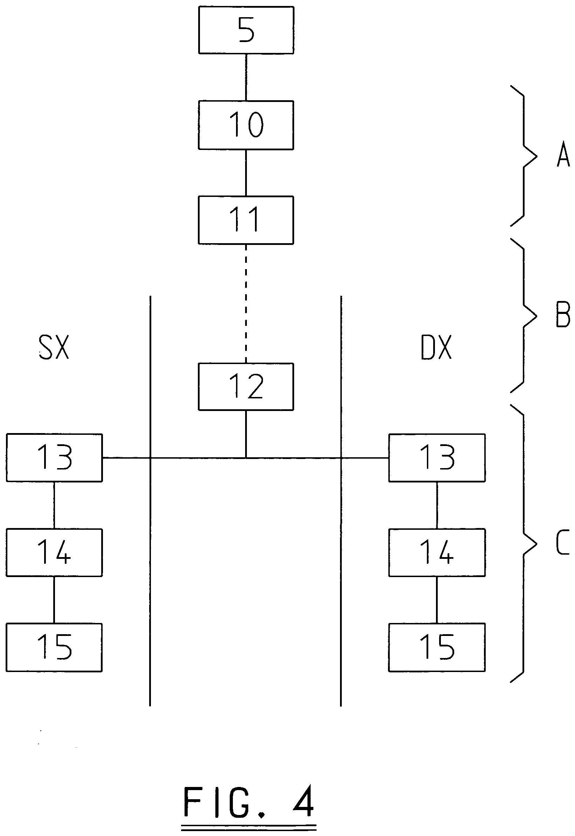

Subsequently, the method comprises an inserting phase, as indicated in the overall by the reference number 5 in Fig. 4, to be performed by authorized personnel at the breeding location on a hog 6 at a milk piglet stage, within 30 days from his birth or before leaving the original breeding location. In this respect, it is noted that this inserting phase also concerns the mother hog, if not already treated. In detail, this inserting phase essentially consists of an under-the-skin inserting operation wherein an emission device, as indicated by the reference number 7 in the Figures 2 and 3, is inserted under the skin of each hind leg 8 of such a hog 6. Even more in detail, this inserting operation 5 is articulated in the following operating steps. First of all, it is planned a localizing step which is necessary for the pinpointing of a suitable lodging zone for the lodging of at least one emission device 7 into each hid leg 8 of the hog 6. It has advantageously been found that said lodging zone approximately coincides with the medial surface, as indicated on the whole by the reference number 9 in the Figures 2 and 3, of the zoo-technical knee. In even greater detail, such medial zone is essentially comprised between the anatomical knee and the zoo-technical knee. Finally, it is planned an injecting step performed to inject the relative emission device 7 into each previously localized lodging zone 9. This injecting step is appropriately performed in a cranial-caudal direction of the tibia (third proximal) toward the medial flexor of the toes and not beyond the medial head of the gastrocnemius muscle.

In a further step, this method also provides for a series of receiving/processing/memorizing phases to be performed at programmed intervals during the weaning (A), the growth (B) and finally the processing (C) of this hog 6. In detail, these phases take care of the receiving, processing and memorizing operations of the particular identifying codes contained in the emission devices 7. More to the point, the mentioned receiving/processing/memorizing phases to be carried out during the weaning (A) and growing (B) phases and up to the termination of the hog (6), as indicated on a whole by the reference numbers 10, 11 and 12 in Fig. 4, are essentially set up as follows. The receiving phase is normally carried out by using receiving devices (not shown) of an individual or collective type. In the first case, for instance, the breeder approaches each previously treated hog 6 with a receiving device, so as to receive the particular identifying code emitted by each emission device 7. In the second case, for instance, each already treated hog 6 is invited to pass through a mandatory channel wherein a receiving device picks up the particular identifying code emitted by each emission device 7. The treating phase provides for a generating operation designed to generate the general identifying code of this hog 6 based on the relative particular identifying codes. In detail, this generating operation simply consists of running the mentioned particular identifying codes alongside each other. The memorizing phase provides for an operation to gather all the picked-up and processed codes with the codes picked up and processed previously and with other data, as well as a filing operation to file the codes/informative details/data of this hog 6 which are, for exemplifying but non-limiting purposes, referring to his origin, ancestors and descendants, the origin/destination of the meat cuts, etc. in a data base. Such data base may advantageously be consulted by the operators of the field in an on-line and off-line way. These processing/memorizing phases are set up by using appropriately programmed data processing/memorizing devices (not shown). In the conclusive processing phase (C) of a hog 6, which is articulated in the operation of severing the hind legs 8 and in the process of converting the latter to raw/cooked hams, the above receiving/processing/memorizing phases are carried out separately on the left (SX) and right (DX) hind leg, respectively.

The method is finally concluded by a recovering operation, indicated as a whole by the reference number 15, in order to recover the emission devices 7 from said hind legs 8 at the end of the processing step (C). This recovering operation can advantageously be performed in the context of the overall de-boning operations that specialized operators are performing on certain types of hams to remove the bones. This recovering operation 15 is consequently performed in two steps. The first step provides for a de-boning incision into the hams, which frees the emission devices 7. The second passage provides for an extraction of said emission devices 7 through the mentioned de-boning incisions, which can appropriately be performed by aspirating devices (not shown) guided by hand. The emission devices 7 recovered in this manner are appropriately disposed of, so as to prevent their re-utilization.

In order to set up this method, a structure of an identifying code especially designed for this purpose must be made available. According to the invention, this identifying code is constituted of a complex alpha-numerical representation capable of expressing a group of data relating to a hog, such as for instance the birth and breeding date, the code assigned by the controlling authority, and so on. In the specific application, this complex alpha-numerical representation is constituted of a combination of a first complex alpha-numerical sub-representation associable to the left hind leg of said hog, and of a second complex alpha-numerical representation associable with the right hind leg of the same hog. In detail, this combination consists in running such first and second sub-representations alongside each other. It is finally to be clarified that the mentioned complex alpha-numerical general representation defines the mentioned general identifying code, and the mentioned first and second complex alpha-numerical sub-representations define the mentioned particular identifying codes, respectively.

It has in practice been established that the described method and the coding structure achieve their aim and the expected objects. The method in fact successfully allows a complete and real-time control of the hog production, butchering and processing line. Moreover, the method allows drastically reducing any attempts at fraudulent manipulation. The method also allows performing the emission device recovering operation in a simple, easy and safe manner. The method finally allows avoiding any occurrence of pathologies in the treated hogs from the very beginning.

The method and the structure of the code according to the invention are susceptible of numerous changes, all of which are falling within the scope of the same inventive concept.

In the embodiment, the employed materials, shapes, dimensions and executive details may differ from those indicated here but be their technical equivalents, without thereby abandoning the scope of the invention.

## Claims

1. Tracking method for the tracking of a hog production line, in particular for the production of raw/cooked ham, especially if denominated from a protected/controlled origin, and structure of an identifying code for carrying out such a method, comprising a sequence of :
- a preliminary loading phase for the loading of particular identifying codes in emission devices;
- an inserting phase for inserting said emission devices in a hog at the milk piglet stage within 30 days from his birth, or at any rate prior to leaving the original breeding station;
- intermediate receiving/processing/memorizing phases for the respective receiving, processing and memorizing of said particular identifying codes during the weaning, growing and processing phases of said hog;
**characterized in that** said inserting phase comprises a subcutaneous inserting for inserting at least one emission device under the skin of each hind leg of said hog, so as to associate a particular identifying code with each hind leg of said hog, and a general identifying code of said hog, constituted of a combination of said particular identifying codes.

2. Method, according to the foregoing claim, **characterized in that** said inserting operation comprises a first localizing step to pinpoint at least one suitable lodging zone to lodge at least one emission device in each hind leg of said hog, and a second injecting step of injecting at least one emission device into each lodging zone.

3. Method, according to claim 1 or 2, **characterized in that** said lodging zone approximately coincides with the medial surface of the zoo-technical knee.

4. Method, according to one or more of the foregoing claims, **characterized in that** said medial surface is essentially comprised between the anatomical and said zoo-technical knee.

5. Method, according to one or more of the foregoing claims, **characterized in that** said injecting step is performed in a cranial-caudal direction of the tibia (third proximal) toward the medial flexor of the toes and up to the medial head of the gastrocnemius muscle.

6. Method, according to one or more of the foregoing claims, **characterized in that** said receiving phase is carried out by using individual and collective devices.

7. Method, according to one or more of the foregoing claims, **characterized in that** said processing phase consists of a generating phase to generate said general identifying code from said particular identifying codes.

8. Method, according to one or more of the foregoing claims, **characterized in that** said generating operation consists in a step of running said particular identifying codes alongside each other.

9. Method, according to one or more of the foregoing claims, **characterized in that** said memorizing phase comprises an operation of gathering said general identifying code and said particular identifying codes, together with other data and information details on said hog and an operation of filing said codes and other data/information details in a data base capable of being managed/consumed on-line and off-line at any moment.

10. Method, according to one or more of the foregoing claims, **characterized in that** said processing/memorizing phases are carried out by using appropriately programmed data processing/memorizing devices.

11. Method, according to one or more of the foregoing claims, **characterized in that** it comprises a recovery phase for the recovery of said emission devices from said hog, at the conclusion of said processing phase.

12. Method, according to one or more of the foregoing claims, **characterized in that** said recovery phase comprises an extraction operation for extracting said emission devices from said hind legs through de-boning incisions.

13. Method, according to one or more of the foregoing claims, **characterized in that** said extracting phase is carried out by aspirating devices to aspirate said emission devices from the finished product.

## Patentansprüche

1. Verfolgungsverfahren für die Verfolgung einer Schweineförderlinie, insbesondere für die Herstellung von rohem/gekochtem Schinken, insbesondere wenn es aus einem geschützten/kontrollierten Ursprung stammt, und eine Struktur eines Identifizierungscodes zum Durchführen eines solchen Verfahrens mit einer Sequenz von :
- eine vorläufige Ladephase für die Beladung bestimmter Identifizierungscodes in Emissionsvorrichtungen;
- eine Einführphase zum Einsetzen der Emissionsvorrichtungen in ein Schwein in der Milchferkelstufe innerhalb von 30 Tagen nach seiner Geburt oder zumindest vor dem Verlassen der ursprünglichen Zuchtstation;
- Zwischenerfassungs/Verarbeitungs/Speicherphasen für das resetive Empfangen, Verarbeiten und Speichern der besagten bestimmten Identifizierungscodes während der Entwöhnungs, Aufwachs und Verarbeitungsphasen des Schweines;
- **dadurch gekennzeichnet, daß** die Einführphasen eine subkutane Einfügung zum Einfügen mindestens einer Emissionsvorrichtung unter die Haut jedes Hinterbeines des Schweines umfassen, um einen bestimmten Identifizierungscode mit jedem Hinterbein des Schweines und einen allgemeinen Identifizierungscode zuzuordnen Das von einem Kombination der bestimmten Identifizierungscodes kostet.

2. Verfahren nach dem vorhergehenden Anspruch, **dadurch gekennzeichnet, dass** der Einfügevorgang einen ersten Lokalisierungsschritt umfasst, um mindestens eine geeignete Aufbewahrungszone zu lokalisieren, um mindestens eine Emissionsvorrichtung in jedem Hinterschenkel des Hogs aufzunehmen, und einen zweiten Injektionsschritt von Injizieren mindestens einer Emissionsvorrichtung in jede Unterbringungszone.

3. Verfahren nach Anspruch 1 oder 2, **dadurch gekennzeichnet, dass** die Liegezone annähernd mit dem medialen Bereich des zoo-technischen Knies zusammenfällt.

4. Verfahren nach einem oder mehreren der vorhergehenden Ansprüche, **dadurch gekennzeichnet, dass** die mediale Oberfläche im Wesentlichen zwischen dem anatomischen und dem zootechnischen Knie besteht.

5. Verfahren nach einem oder mehreren der vorhergehenden Ansprüche, **dadurch gekennzeichnet, dass** der Injektionsschritt in einer kranial-kaudalen Richtung der Tibia (dritter proximaler) thowarad der mediale Beugespanner der Zehen und bis zum medialen Kopf der Gastrocnemius Muskel.

6. Verfahren nach einem oder mehreren der vorhergehenden Ansprüche, **dadurch gekennzeichnet, dass** die Aufnahmephase unter Verwendung individueller und kollektiver Vorrichtungen erfolgt.

7. Verfahren nach einem oder mehreren der vorhergehenden Ansprüche, **dadurch gekennzeichnet, dass** die Verarbeitungsphasen aus einer Erzeugungsphase zur Erzeugung des allgemeinen Identifizierungscodes aus den bestimmten Identifizierungscodes bestehen.

8. Verfahren nach einem oder mehreren der vorhergehenden Ansprüche, **dadurch gekennzeichnet, dass** der Erzeugungsvorgang in einem Schritt des Laufenlassen der bestimmten Identifizierungscodes nebeneinander besteht.

9. Verfahren nach einem oder mehreren der vorhergehenden Ansprüche, **dadurch gekennzeichnet, dass** die Speicherphase einen Vorgang des Sammelns des allgemeinen Identifizierungscodes und der bestimmten Identifizierungscodes zusammen mit anderen Daten- und Informationsdetails auf dem Schwein und einem Vorgang des Archivierens umfasst Die Codes und andere Daten/Informationsdetails in einer Datenbank, die in der Lage ist, on-line und offline zu jedem Zeitpunkt verwaltet/konsultiert zu werden.

10. Verfahren nach einem oder mehreren der vorhergehenden Ansprüche, **dadurch gekennzeichnet, dass** die Verarbeitungs/Speicherphase unter Verwendung von entsprechend programmierten Datenverarbeitungs/Speichervorrichtungen durchgeführt wird.

11. Verfahren nach einem oder mehreren der vorhergehenden Ansprüche, **dadurch gekennzeichnet, dass** es am Ende der Verarbeitungsphase eine Erholungsphase für die Rückgewinnung der Emissionsvorrichtungen aus dem Schwein umfasst.

12. Verfahren nach einem oder mehreren der vorhergehenden Ansprüche, **dadurch gekennzeichnet, dass** es eine Wiederherstellungsphase umfasst, die einen Extraktionsvorgang zum Extrahieren der Emissionsvorrichtungen von den Hinterbeinen in die Entbeinungseinschnitte umfasst.

13. Verfahren nach einem oder mehreren der vorhergehenden Ansprüche, **dadurch gekennzeichnet, daß** die Extrahierphase dadurch erfolgt, daß die Abgabevorrichtungen aus dem Fertigprodukt abgesaugt werden.

## Revendications

1. Méthode de traçabilité pour la traçabilité d'une chaîne de production porcine, en particulier pour la production de jambon cru/cuit, notamment si elle est dénommée d'origine protégée/contrôlée, et structure d'un code d'identification pour exécuter un tel procédé, comprenant une séquence de :
- une phase de chargement préliminaire pour le chargement de codes d'identification particuliers dans les dispositifs d'émission;
- une phase d'insertion pour insérer lesdits dispositifs d'émission dans un porc à l'étape du porcelet de lait dans les 30 jours de sa naissance, ou au moins avant de quitter le poste d'élevage d'origine;
- des phases de réception/traitement/mémorisation intermédiaires pour la réception, le traitement et la mémorisation respectifs desdits codes d'identification particuliers pendant les phases de sevrage, de croissance et de traitement dudit porc;
**caractérisée en ce que** lesdites phases d'insertion comprennent une insertion sous-cutanée pour insérer au moins un dispositif d'émission sous la peau de chaque patte arrière dudit porc, de manière à associer un code d'identification particulier avec chaque patte arrière dudit porc, et un code d'identification général af dudit porc, constitué d'un combinathion desdits codes d'identification particuliers.

2. Procédé, selon la revendication précédente, **caractérisé en ce que** ladite opération d'insertion comprend une première étape de localisation pour repérer au moins une zone d'accommodation appropriée pour loger au moins un dispositif d'émission dans chaque patte arrière dudit porc, et une deuxième étape d'injection pour injecter au moins un dispositif d'émission dans chaque zone d'hébergement.

3. Procédé selon la revendication 1 ou 2, **caractérisé en ce que** ladite zone de logement coïncide approximativement avec la zone médiane du genou zoo-technique.

4. Procédé selon une ou plusieurs des revendications précédentes, **caractérisé en ce que** ladite surface médiane est essentiellement comprise entre le genou anatomique et le genou zoo-technique.

5. Procédé selon une ou plusieurs des revendications précédentes, **caractérisé en ce que** ladite étape d'injection est réalisée dans une direction crânienne-caudale du tibia (troisième extrémité proximale) le long du fléchisseur médian des orteils et jusqu'à la tête médiane du muscle gastrocnémien.

6. Procédé, selon une ou plusieurs des revendications précédentes, **caractérisé en ce que** ladite phase de réception est réalisée en utilisant des dispositifs individuels et collectifs.

7. Procédé, selon une ou plusieurs des revendications précédentes, **caractérisé en ce que** lesdites phases de traitement consistent en une phase de génération pour générer ledit code d'identification général à partir desdits codes d'identification particuliers.

8. Procédé, selon une ou plusieurs des revendications précédentes, **caractérisé en ce que** ladite opération de génération consiste en une étape consistant à faire tourner lesdits codes d'identification particuliers les uns à côté des autres.

9. Procédé, selon l'une ou plusieurs des revendications précédentes, **caractérisé en ce que** ladite phase de traitement/mémorisation comprend une opération de collecte dudit code d'identification général et desdits codes d'identification particuliers, ensemble avec d'autres données et détails d'informations sur ledit porc et une opération de dépôt desdits codes et d'autres détails de données/informations dans une base de données pouvant être gérée/consultée en ligne et hors ligne à tout moment.

10. Procédé, selon une ou plusieurs des revendications précédentes, **caractérisé en ce que** ladite phase de traitement/mémorisation est réalisée en utilisant des dispositifs de traitement/mémorisation de données programmés de manière appropriée.

11. Procédé, selon une ou plusieurs des revendications précédentes, **caractérisé en ce qu'**il comprend une phase de récupération pour la récupération desdits dispositifs d'émission à partir dudit porc, à la fin de ladite phase de traitement.

12. Procédé, selon une ou plusieurs des revendications précédentes, **caractérisé en ce qu'**il comprend une phase de récupération comprenant une opération d'extraction pour extraire lesdits dispositifs d'émission desdites pattes arrière par incisions de désossage.

13. Procédé, selon une ou plusieurs des revendications précédentes, **caractérisé en ce que** ladite phase d'extraction est réalisée par des dispositifs d'aspiration pour aspirer lesdits dispositifs d'émission à partir du produit fini.
